# EUROPEAN PATENT SPECIFICATION

(11) **EP 2 754 763 B1**
(45) Date of publication and mention of the grant of the patent: **14.06.2017**
(21) Application number: 14150819.2
(22) Date of filing: 10.01.2014
(51) Int. Cl.: E03F 3/04, F16L 41/08

(54) **Connection assembly**
Verbindungsanordnung
Ensemble de connexion

(30) Priority: 11.01.2013 NL 2010112
(43) Date of publication of application: 16.07.2014
(73) Proprietor: Dyka B. V., 8331 LJ Steenwijk (NL)
(72) Inventor: Wessels, Rien, 8331 LJ STEENWIJK (NL); Baijense, Leendert Adrianus, 8331 LJ STEENWIJK (NL); Mollema, Ruurd Hette, 8331 LJ STEENWIJK (NL); Zuurmond, Johannes, 8331 LJ STEENWIJK (NL)
(74) Representative: van de Wal, Barend Willem

(56) References cited:
- AU-B2- 505 301
- DE-A1-102008 000 049
- GB-A- 2 120 340

## Description

### BACKGROUND

The invention relates to a connection assembly for connecting a branch pipe to a cylindrical structure, such as a main pipe. In particular the invention relates to a connection assembly for connecting a branch pipe to a drain pipe or sewer pipe, to a water supply pipe or to a cylindrical inspection pit.

UK Patent Application GB 2 120 340 describes a joint for connecting a branch pipe to a hole in a wall of a pipe, and in particular a connection assembly according to the preamble of claim 1. The joint comprises an inner formed by a sleeve one end of which is provided with a flange which has a larger diameter than the diameter of said hole in the pipe wall and which abuts the inner surface of the pipe, and a saddle formed by a sleeve which surrounds the inner, wherein the inner is provided with a substantially longitudinal slit permitting the pushing of the inner beyond the edge of the hole in the pipe wall. Owing to the slit, the inner can be displaced from the outside of the pipe to the inside thereof by positioning the inner transversally at the hole so that its centre line is perpendicular to the centre line of the hole and by positioning the slit at the wall, whereafter the inner is pushed beyond the edge of the hole and displaced into the pipe. For securing the joint to the pipe, a shoulder is provided which may be turned in place into the inner, so that a flange of the shoulder presses the saddle against the outer surface of the pipe, and so that the flange of the inner is pressed against the inner surface of the pipe, thereby securing the joint to the pipe.

It is an object of the present invention to provide a more simple connection assembly which is easily mounted on a cylindrical structure, preferably without requiring tools, additional parts or adhesives for mounting the connection assembly on the cylindrical structure.

### SUMMARY OF THE INVENTION

To this end, according to a first aspect, the present invention provides a connection assembly according to claim 1. Clamping of the connection assembly to the cylindrical structure may thus be achieved using only said first and second part, which can be conveniently locked in place to each other by pushing these towards each other without rotating the first and second part relative to each other or relative to the cylindrical structure. The locking means allow the first and second parts to be manually mounted to the cylindrical structure, i.e. without requiring any special tools. Moreover, the connection assembly according to the present invention provides a purely mechanical connection to the cylindrical structure, which does not require the first or second part or the cylindrical structure to be deformed to ensure a good connection, and may as a result be removed from the opening without damage thereto or to the cylindrical structure, facilitating re-use of the cylindrical structure. The purely mechanical nature of the connection makes the connection assembly suitable for connecting to a cylindrical structure of any kind of material, such as plastic, metal or concrete. Additionally, the connection assembly may be used to connect to different kinds of cylindrical structures having a range of wall thicknesses, e.g. the same assembly may be connected to any cylindrical structure having a wall thickness in the range of 2 - 8 cm. Furthermore, the flow of fluid, i.e. liquid, gas or a mixture thereof, through the cylindrical structure remains substantially unblocked / undisturbed when a connection assembly according to the invention is fit to a cylindrical structure, as the depth with which the second part penetrates into the cylindrical structure is very small, i.e. typically equal to the thickness of the flange of the second part.

When the assembly is mounted on the cylindrical structure, the first flange of the first part may directly contact the outer surface of the cylindrical structure, or may push against said outer surface via a further structure such as a sealing ring comprising a flexible or elastic material. Likewise, the second flange may, when mounted, directly contact the inner surface of the cylindrical structure, or do so indirectly via a further structure such as a flexible or elastic sealing ring. Preferably, the outer diameters of the flanges remain substantially constant when the first flange is moved towards the second flange during mounting; in other words, engagement of the locking means does not cause any substantial widening of either of the flanges.

In an embodiment the first and second locking means together are adapted for forming a click connection. The connection assembly may thus easily be mounted on a cylindrical structure by placing the first part on the outer side of the cylindrical structure and the second part, i.e. at least the second flange thereof, on the inner side of the cylindrical structure, and then clicking them together, preferably without using any special tools. Typically, the second part is inserted into the pipe via a through opening at either end of the cylindrical structure, said through opening having a larger diameter than the outer diameter of the second flange. Alternatively, when the second part is at least partially made from a flexible and elastic material, the second part may be arranged on the inner side of the cylindrical structure by compressing the second part and passing it through the opening in the circumferential wall of the cylindrical structure, and the letting second part restore to its original shape.

In an embodiment said first tubular section has a diameter smaller than or substantially equal to the diameter of said opening. The first tubular section may thus extend at least partially beyond the outer surface of the cylindrical structure and protrude into opening. When the diameter of the first tubular section is substantially equal to the diameter of the opening, a tight fit between the opening and the first tubular section may be achieved.

In an embodiment said first tubular section comprises an inner circumferential wall, and said second tubular section comprises an outer circumferential wall for engaging said inner circumferential wall, or vice/versa, thus forming a connection between the first and second parts.

In an embodiment, the first part further comprises a receiving section for receiving an insert pipe. The diameter of the receiving section may differ from the diameter of the first tubular section

In an embodiment, the assembly further comprises a cover adapted for removable attachment to the receiving section of the first part and for closing off the receiving section. Such a cover prevents damage to the receiving section and also prevents dirt from entering the receiving section.

In an embodiment, the first and second flanges are shaped for, when the connection assembly is mounted on said cylindrical structure, positioning the tubular sections so that their longitudinal axes substantially coincide and are substantially perpendicular to a longitudinal axis of the cylindrical structure. Preferably, when the first part comprises said tubular branch pipe receiving section, this receiving section has a longitudinal axis in line with the longitudinal axis of the first tubular section, though in an alternative embodiment the longitudinal axis of the tubular branch pipe receiving section may be at an angle, e.g. an angle of 15, 30, 45 or 60,90 degrees or at any other angle to the longitudinal axis of the first tubular section.

In an embodiment wherein said opening in the cylindrical structure is delimited by an annular wall, wherein the first tubular section or said second tubular section further comprises an outer circumferential wall for abutting the annular wall. For instance, when the first tubular section fits within the second tubular section such that the inner circumferential wall of the first tubular section engages the outer circumferential wall of the second tubular section, then the outer circumferential wall of the first tubular section may abut the annular wall.

Alternatively, when the second tubular section fits within the first tubular section such that the inner circumferential wall of the second tubular section engages the outer circumferential wall of the first tubular section, then the outer circumferential wall of the second tubular section may abut the annular wall. In both cases, when the tubular sections of both the first part and the second part extend at least partially into the opening, the tubular sections reinforce the annular wall of the opening. Preferably, the first or section tubular section which abuts the annular wall has an outer diameter substantially equal to the inner diameter of the annular wall, for providing a substantially tight fit between said tubular section and the annular wall.

In an alternative embodiment, particularly advantageous for use with profiled cylindrical structures, the connection assembly further comprises a separate support ring to be placed with its outer surface abutting said annular wall and with its inner surface abutting the circumferential outer wall of the first or second tubular element. The support ring has an outer diameter substantially corresponding to the diameter of the opening, and may further be provided with means for preventing the ring from falling into and/or out of the opening.

In an embodiment said first tubular section and said second tubular section are adapted for at least partially extending into said opening. Preferably, when mounted on the cylindrical structure, one of the first and second tubular sections does not extend completely through said opening, whereas the other does. In particular it is preferable that the first tubular section, when mounted, does not extend past the inner surface of the cylindrical structure or past the flange of said second part, and/or that the downstream distal end of the first tubular section remains spaced apart from the upper surface of the second flange by a small gap. Such a small gap preferably has a height smaller than the width of the circumferential wall in of the cylindrical structure.

In an embodiment said first and second locking means are adapted for blocking movement of said first flange away from said second flange at a number of predetermined positions. The same connection assembly may thus be mounted on pipes having different wall thicknesses corresponding substantially to the predetermined positions. In a preferred embodiment the number of predetermined positions is at least 2, preferably 4, more preferably 6, and most preferably 8 or more.

In an embodiment the predetermined positions comprise a first position in which a shortest distance between the first flange and second flange for clamping the wall therebetween is substantially equal to a predetermined maximum distance, and further comprise a different last position, in which said shortest distance is substantially equal to a predetermined minimum distance. For instance, when the connection assembly is to be mounted on a relatively thick circumferential wall, such as concrete wall or a profiled wall, said minimum and maximum distances may be respectively 1 cm and 50 cm, 10 cm and 50 cm, preferably 2 cm and 20 cm, for clamping a portion of a wall of a cylindrical structure having a wall thickness in the range between the minimum distance and the maximum distance. When the connection assembly is to be mounted on a relatively thin wall, e.g. a thin profiled wall or a smooth plastic wall, said minimum and maximum distances may be respectively 1 mm and 5 cm, 2 mm and 4 cm, preferably 2 mm and 1 cm.

In an embodiment, the assembly further comprises an elastic seal to be placed between the first flange and the cylindrical structure or between the second flange the cylindrical structure. Such a seal, e.g. a rubber seal, improves the fluid-tightness of the connection and also compensates for variations in wall thickness of the cylindrical structure.

In an embodiment said first part is provided with first guide extending substantially along the longitudinal direction of said first tubular section, and said second part is provided with a corresponding second guide extending substantially along the longitudinal direction of the second tubular section, wherein said first and second guides are adapted for guiding translational movement of first part relative to said second part and for substantially blocking a rotational movement of said first part relative to said second part. The cooperating guides facilitate a correct initial rotational orientation of the first part relative to the second part when these parts are being connected to each other, and also prevent rotation of the first part relative to the second part when the respective flanges of these parts are moved towards each other for clamping the wall of the cylindrical structure there between. Preferably, the guide or guides of the first tubular section are arranged on the portion of said first tubular section which first contacts the second tubular section when the first and second parts are fit together.

In an embodiment said guides are formed on the same facing surfaces of said tubular sections as said locking means and preferably extend across said locking means in the longitudinal direction of the respective tubular parts. Preferably, the guides are arranged on the tubular parts at a position which allows a maximum length for the guides.

In an embodiment, when said first and second parts are mounted to the cylindrical structure, said guides are arranged in a common plane which intersects the longitudinal axis of the cylindrical structure

In an embodiment said first part and said second part are each provided with an abutment surface, for blocking movement of the first tubular section past said second flange. Thus, when the connection assembly is mounted to a cylindrical structure, disturbance of the flow of fluid and/or liquid in the cylindrical structure is minimized.

In an embodiment said first locking means comprises a first plurality of locking members, and said second locking means comprises a second plurality of locking members for engaging said first plurality of locking members for said blocking of movement of the first flange away from said second flange. The locking members may for instance comprise, or be formed as ridges, raised edges, grooves, saw-tooth shaped protrusions, and so on.

In an embodiment the number of locking members in said first plurality of locking members differs from the number of locking members in said second plurality of locking members, preferably by a factor of 2 of more. Preferably, the second part has the greater number of locking members. More preferably, the locking members of the first and/or second locking means are arranged such that they are located only above the outer surface of the cylindrical structure when the connection assembly is mounted to the cylindrical structure. In this way the portions of the tubular sections located close to the annular wall of the opening can remain substantially smooth.

In an embodiment said locking members of said first and/or second locking means are arranged equidistantly, preferably at distances of 3 mm or less, more preferably at distances of 2 mm or less. The distances between the locking members of a locking means may be chosen dependent on factors such as diameters of tubular structures on which the locking members are arranged, and/or a desired range of wall thicknesses which the connection assembly should be able to clamp.

In an embodiment the locking members of said first and/or second locking means extend substantially around the entire circumference of said first and/or second tubular section. Preferably the locking members extend in parallel planes which are perpendicular to the longitudinal axis of the tubular section.

In an embodiment said first and/or second flange are formed to follow the shape of the inner and/or outer surface of the cylindrical structure. The flanges thus provide a good fit to the respective outer and inner surface of the cylindrical structure.

In an embodiment said first and/or second flange are saddle shaped. The manner of locking the first and second part to each other according to the present invention using the first and second locking means is particularly advantageous for this embodiment, as it is undesirably to rotate such saddle shaped flanges relative to the cylindrical structure to ensure clamping of the connection assembly. Preferably, both the first and second flange are saddle shaped, ensuring good clamping and distribution of clamping force, in particular when the first and second part are mounted on a smooth cylindrical structure. In an alternative embodiment, the second flange is saddle shaped, and the first flange may have another shape, for instance the first flange may have a planar and/or profiled shape. Such an alternative embodiment is especially suitable for connecting to cylindrical structures having profiled outer surfaces, such as profiled pipes.

In an embodiment said first and/or second part are each formed as a single part, preferably as an injection molded part. The first and second part may thus be produced individually at low cost.

In an embodiment, said first and/or said second part comprise a plastic material, preferably PVC (Polyvinylchloride) though PP (Polypropylene) might be used as well. Preferably the first and/or second part are made entirely from said plastic material. When such a plastic material is at least partially elastic, the first and/or second part can slightly deform during clamping, to better fit to the respective outer and inner surface of the cylindrical structure. However, the material preferably is not a rubber material.

In an embodiment the first and/or second part comprise a metal material, such as stainless steel, brass and/or copper. In this embodiment the first and/or second part are preferably made entirely from said metal material.

In an embodiment, the first and second part as well as the respective locking means thereof are made from a relatively hard material to provide improved structural rigidity and stability of the connection when mounted. Such relatively hard materials have a hardness of at least 40 R, preferably at least 90 R, more preferably at least 110 R according to the Rockwell Hardness R scale as described in ISO 2039-2. When such relatively hard materials are used, e.g. PVC (Polyvinylchloride), PP (Polypropylene), ABS (Acrylonitrile-Butadiene-Styrene), ASA (Acrylonitrile-Styrene-Acrylate), PA (Polyamide), POM (Polyoxymethylene), PMMA(Polymethymethacrylate), PS (Polystyrene), the first and second parts of the connection assembly are less likely to change in position and/or orientation relative to each other once they clamp the wall of the cylindrical structure there between and the locking means are engaged.

In an embodiment said first tubular section of said first part projects past said first flange for extending beyond said outer surface of the cylindrical structure and at least partially into said opening of the cylindrical structure. The first tubular part thus extends at least partially into the opening in the cylindrical structure when the first part is attached to the cylindrical structure.

In an embodiment, the first tubular section has a first edge facing a top surface of said second flange of the second part, and the first flange has a second edge for facing said top surface, wherein, when the locking means engage each other, a mutual distance between the first edge and said top surface is less than a mutual distance between the second edge and said top surface.

In an embodiment the connection assembly further comprises a sealing member comprising a flexible material, to be arranged between said first and second flanges. The sealing member, e.g. a sealing sleeve or sealing ring, preferably comprises a flexible elastic material such as rubber, for improving the fluid tightness of the connection. Additionally, when the locking means are adapted for blocking movement of the flanges away from each other at a number of predetermined positions, the elasticity of the sealing member allows use of the connection assembly with a number of cylindrical structures greater than said predetermined number, each of said cylindrical structures having a different wall thickness. For instance when the sealing means can be compressed a certain amount, e.g. 3mm, and the predetermined positions in which the locking means blocks movement of the flanges away from each other are spaced apart by the same amount or less, then the first and second part can be arranged for clamping any kind of cylindrical structure having a wall thickness anywhere in a continuous range defined by the predetermined positions in which the distance between the flanges is smallest and the greatest.

According to an embodiment a connection assembly for connecting a branch pipe to a cylindrical structure which is provided with an opening for connecting the branch pipe thereto, said connection assembly comprising: a first part and a second part, each comprising a tubular section having a diameter smaller than a diameter of said opening and a flange having a diameter larger than said diameter of said opening; wherein said first part and said second part are adapted for clamping said cylindrical structure between their respective flanges; wherein said tubular sections are provided with first locking means and second locking means respectively on facing surfaces of said tubular sections; wherein said first and second locking means are adapted for engaging each other for allowing linear movement of said flanges towards each other while said flanges remain substantially rotationally fixed relative to each other, and for blocking movement of said flanges away from each other.

According to an embodiment a connection assembly as described above is provided, further comprising said cylindrical structure, such as a main pipe or an inspection pit.

In an embodiment the cylindrical structure is provided with one or more openings in its circumferential wall and a corresponding number of connection assemblies as described above.
Preferably, the first and second parts of the connection assemblies are mounted to the cylindrical structure, providing a cylindrical structure with pre-mounted connections for one or more branch pipes.

In an embodiment, when the first part and the second part are mounted on the cylindrical structure and the first locking means engage the second locking means, said first flange is arranged on the outside of the cylindrical structure, and said second flange is arranged on the inside of the cylindrical structure.

According to the present invention the connection assembly thus includes a first part and/or a second part as described herein. The invention thus includes a first part adapted for cooperation with a second part, and/or includes a second part adapted for cooperation with a first part.

According to a second aspect, the present invention provides a method for attaching a connection assembly according to any one of the device claims to a cylindrical structure according to claim 14.

Preferably, when the first part is arranged on the cylindrical structure, it is arranged with its tubular section projecting at least partially through said opening.

### BRIEF DESCRIPTION OF THE DRAWINGS

The invention will be elucidated on the basis of an exemplary embodiment shown in the attached drawings, in which:
Figure 1 schematically shows an isometric cross-section of a cylindrical structure to which a connection assembly according to the present invention is attached,
Figure 2 shows a cross-sectional view of the cylindrical structure and connection assembly of figure 1,
Figures 3A and 3B show a detail of the locking means of a second part of the assembly shown in figure 1, and the locking means of an alternative first part of said assembly respectively,
Figure 3C shows a detailed view of the locking means shown in figures 3A and 3B when they engage each other,
Figure 4 schematically shows an isometric view of a cylindrical structure on which a first part of a connection assembly according to the invention has been mounted,
Figure 5 schematically shows an isometric view of a connection assembly according to the present invention, provided with guide members,
Figure 6 schematically shows an isometric cross-sectional view of a connection assembly according to the present invention, comprising an inspection pit on which the first and second part are mounted,
Figures 7A and 7B schematically show an isometric view and a cross-sectional view of an embodiment of the present invention which is especially suitable for connecting to a profiled pipe.

### DETAILED DESCRIPTION OF THE INVENTION

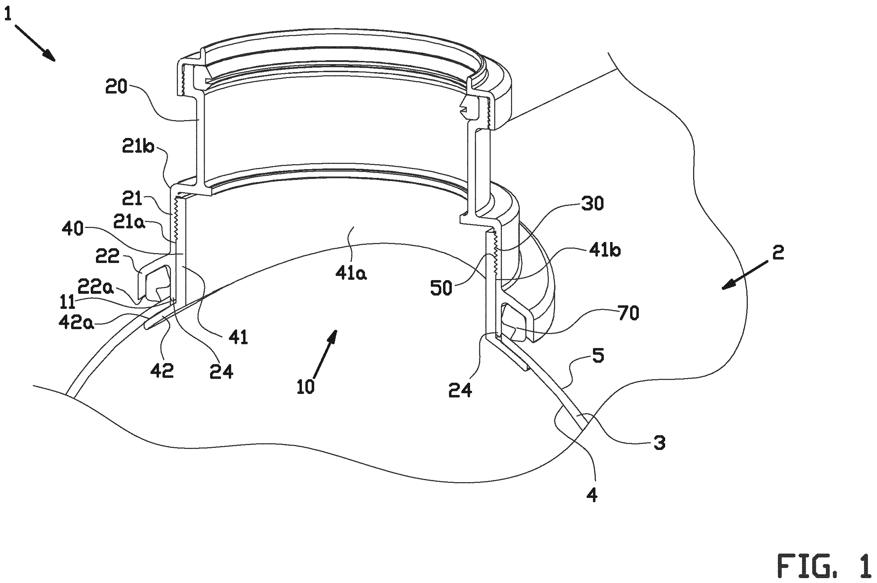

Figure 1 shows an isometric cross-sectional view of a cylindrical structure, in the form of a main pipe 2 comprising a circumferential wall 3 having an inner surface 4 and an outer surface 5. The main pipe 2 is provided with an opening 10 in its circumferential wall 3, for allowing connection of a branch pipe to the main pipe 2. To provide such a connection a connection assembly 1 according to the present invention is mounted on the main pipe 2, said assembly comprising a first part 20, arranged substantially on the outer side of the main pipe 2, and a second part 40, arranged at least partially on the inner side of the main pipe 2. The first part 20 and second part 40 engage each other for clamping a portion of the circumferential wall 3 there between.

The first part 20 comprises a first tubular section 21 having an inner circumferential surface 21a and an outer circumferential surface 21b. The outer circumferential surface 21b of the first tubular section 21 at or near its distal end 24 abuts an annular wall 11 which delimits the opening 10 in the main pipe 2. The second part 40 comprises a second tubular section 41 having an inner circumferential surface 41a and an outer circumferential surface 41b, which second tubular section 41, when the connection assembly 1 is mounted to the main pipe 2 as shown, at least partially fits within the first tubular section 20. In particular, the outer circumferential surface 41b of the second tubular section substantially faces and abuts the inner circumferential surface 21a of the first tubular section 20, at least at or near the position of the annular wall 11 of the opening 10. When the outer circumferential surface 21b of the first tubular section 21 in turn abuts the annular wall 11 of the opening 10, the first tubular section 20 and the second tubular section 40 reinforce the structural integrity of said annular wall 11 of the opening 10. In an alternative embodiment, not shown, the structural integrity of the annular wall may be reinforced by arranging a support ring in the opening 10, with an outer surface of the support ring at least partially abutting the annular wall 11, and with an inner surface of the support ring abutting the outer surface of the first or second tubular section. A number of such support rings of different sizes, e.g. having different inner diameters, outer diameters and/or heights, can be provided as part of the assembly, for facilitating mounting of the first and second parts to main pipes having different wall thicknesses or having openings with inner diameters substantially larger than the outer diameter of the tubular section facing it.

The first tubular section 21 and the second tubular section 41 are formed as substantially contiguous cylindrical bodies having respective outer diameters substantially equal to and smaller than the opening 10 in the main pipe 2. Besides the first tubular section 21, the first part 20 further comprises a first flange 22 connected to the outer surface of the first tubular section 21, said flange having a diameter greater than that of the opening 10 in the main wall 2. The second tubular section 41, at its downstream end, transitions into a second flange 42 having a diameter greater than the diameter of the opening 10 in the main pipe 2. The connection assembly 1 is mounted on the main pipe 2 by clamping a portion of the main pipe between said two flanges 22,42, in particular between surfaces 22a, 42a thereof. To ensure a fluid-tight, in particular a liquid-tight or gas-tight, connection between the connection assembly 1 and the main pipe 2, the assembly is further provided with a sealing ring 70 arranged between the first flange 22 and the outer surface 5 of the main pipe 2. Though the sealing ring 70 is preferably arranged on the outer surface 5 of the main pipe 2, it will be appreciated that a sealing ring may alternatively or additionally be arranged between the second flange 42 and the inner surface 4 of the main pipe 2, or even between the annular wall 11 of the opening in the main pipe 2 and one of said tubular sections.

In order to minimize the disturbance of flow of fluid within the main pipe, the second flange 42 is substantially saddle shaped to follow the shape of the inner surface of the main pipe 2. To improve the fit between the first part 20 and the outer surface 5 of the main pipe 2, the first flange 22 is substantially saddle shaped as well. As a result of these shapes, the first part 20 and second part 40 have to be mounted on the main pipe 2 in a fixed rotational orientation.

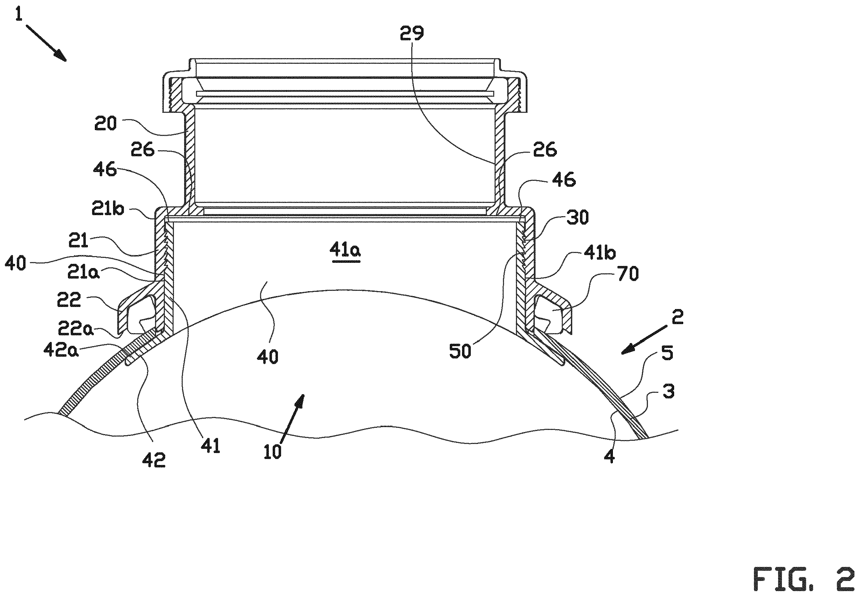

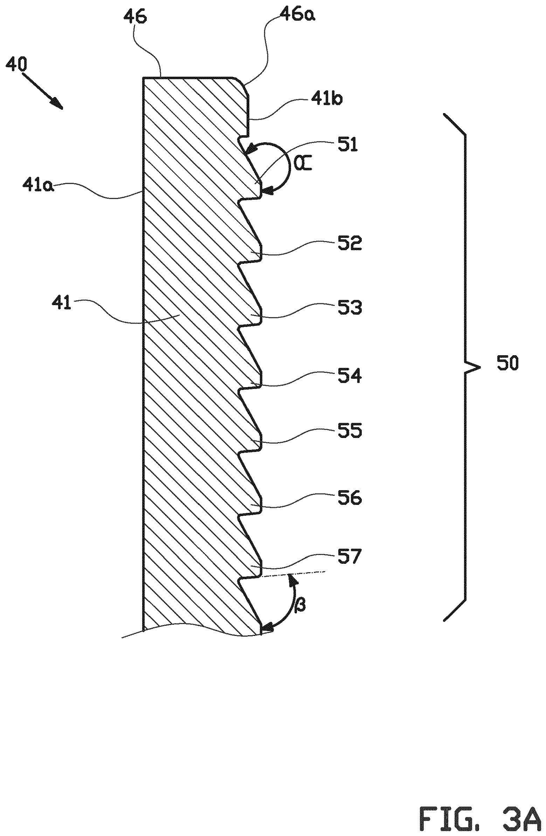

To facilitate mounting the first and second parts on the main pipe, the first tubular section 21 is provided on its inner surface 21a with first locking means 30 comprising a plurality saw-tooth shaped locking members (see fig. 2 and figs 3A-3C). The second tubular section 41 is provided on its outer surface 41b with second locking means 50 comprising a plurality of locking members for engaging the first locking members. The locking members of the second locking means 50 are shaped as ridges which extend along the circumference of the second tubular section in a plurality of planes perpendicular to the longitudinal axis of the second tubular section. When the first locking means 30 and second locking means 50 engage each other they allow linear movement of said first flange 22 towards said second flange 42 even when said flanges remain substantially rotationally fixed to each other during said movement, and block movement of the first flange 22 away from said second flange 42. The first part 20 and second part 40 can thus be connected to each other and to the main pipe 2 by arranging the first and second parts in the opening from the outer and inner side of the main pipe 2 respectively, and then linearly moving said parts together, for instance by hand, such that a portion of the main pipe 2 is clamped between the first flange 22 and the second flange 42.

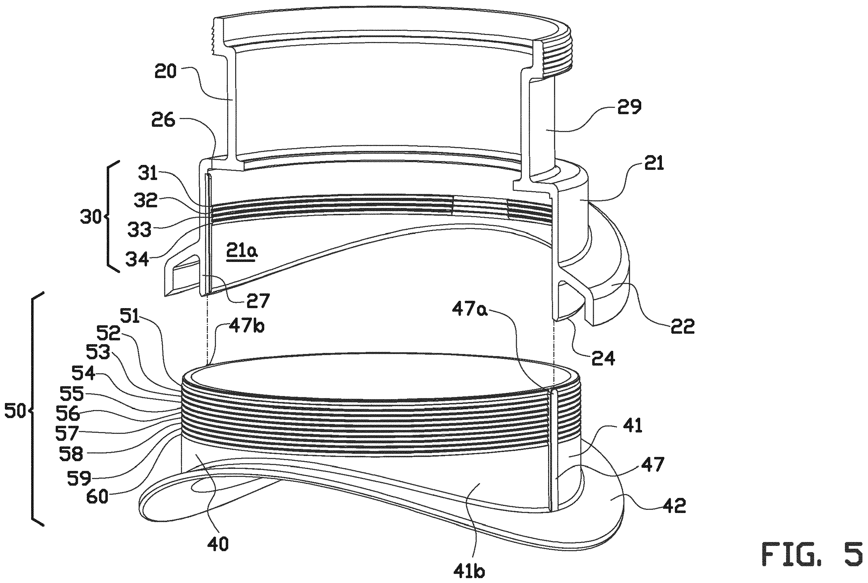

Figure 2 shows a cross sectional view of the connection assembly of figure 1. As can be seen, the second flange 42 substantially follows the shape of the inner surface 4 of the main pipe 2. The first flange 22 of the first part 20 defines an accommodating section for holding the sealing ring 70 in place on the outer surface of the main pipe 2. The first part 20 further comprises a pipe receiving section 29 for receiving a branch pipe therein. When no branch pipe is inserted in the receiving section 29, the receiving section 29 may be substantially closed off in a substantially fluid tight manner using a closing off device known in the art, e.g. as shown in figure 5 of Dutch Patent application NL1029202.

The first part 20 and the second part 40 are provided with respective stop- or abutment surfaces 26,46, which ensure that the distal 24 end of the first part 20 does not move or project past the second flange 42. Disturbance of flow of fluid in the main pipe by the first part it thus substantially avoided.

Figure 3A shows a detail of a portion of the second tubular section 41 of the second part 40 of figure 2. At the outer side of the stop surface 46 the second tubular section 41 comprises a rounded portion 46a, for facilitating insertion of the second tubular section into the first tubular section. The second tubular section 41 comprises second locking means 50 which are integrated with said section and which locking means 50 comprises a number of saw-tooth shaped locking members 51-57. Each of these locking members has a long surface facing away from the outer surface 41b at an angle α of between 200 to 225 degrees, in this case substantially 208 degrees, and a short surface at an angle β of substantially 90 to 95 degrees to the inner surface 41a and outer surface 41a,41b. When the second tubular section 41 is moved along its longitudinal direction towards the first tubular section 21, the first locking members slide over the long surfaces, whereas when it is attempted to move the tubular sections 41,21 in the opposite direction, the first locking members catch on the short surfaces of the teeth, thus blocking movement in the opposite direction.

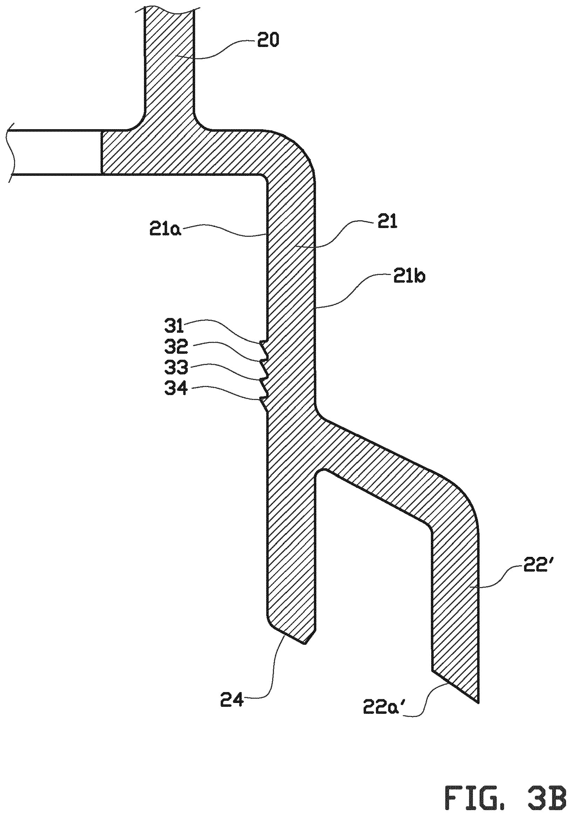

Figure 3B shows a detail of a portion of an alternative first part. The first part 20 is substantially the same as shown in figure 2, except for at flange 22' and edge 22a' thereof. The inner surface 21 of the first tubular section 21 is provided with first locking means 30, comprising four saw-tooth shaped locking members 31,32,33 and 34 which are adapted for engaging four of the corresponding saw-tooth shaped locking members 51-60 of the second locking means 50. When the first tubular section 20 is moved relative to the second tubular section 40 so that the first and second locking means engage, either or both of the first and second locking means may resiliently deform for allowing the first flange to be brought closer to the second flange. When the locking members 30,50 are properly engaged, such that the short surfaces of the saw-tooth shaped locking members engage each other, there is substantially no deformation of the locking members and their corresponding tubular sections.

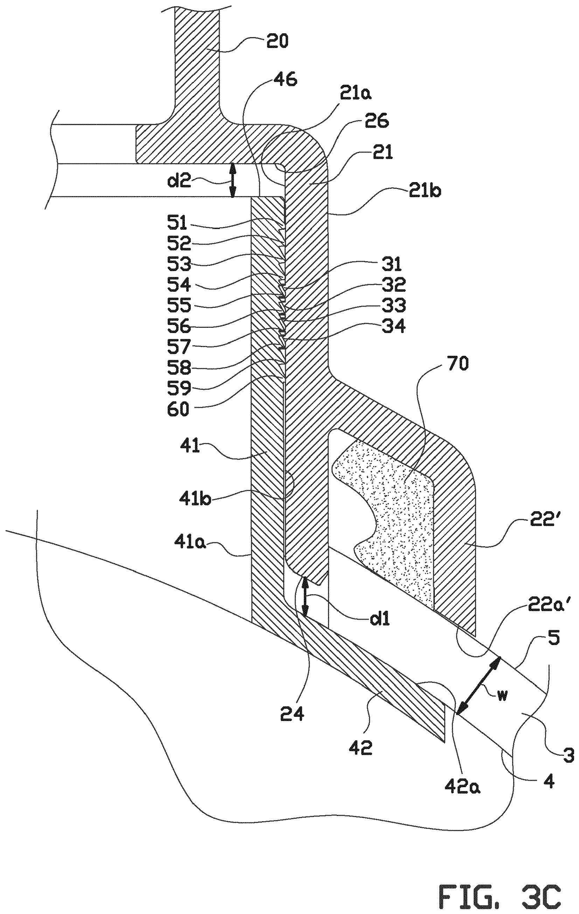

Figure 3C shows a detail of the first and second part shown in figures 3A and 3B, wherein the first and second locking members 30, 50 engage each other. Locking members 31-34 of the first locking means 30 engage locking members 54-60 of the second locking means 50. The distance d1 between edge 24 of the first tubular section 20 to the surface 42a of flange 42 of the second tubular section can be set, depending on which of the second locking members 51-60 engage first locking members 31-34. The same connection assembly can thus be used to connect to main pipes having a wall thickness W in a range equal to a difference in height between the edge 24 and the surface 42 when locking member 31 engages locking member 51, and when locking member 31 engages locking member 56. When the locking means engage each other, the distance d1 between edge 24 of the first tubular section to the surface 42a is greater than the distance d2 between abutment surfaces 26 and 46, so that deformation of the flange 42 due to pressure exerted thereon by edge 24 is prevented. When the first part 20 and second part 30 are mounted on the pipe, edge 22a' of the first flange 22' abuts the outer surface 5 of the circumferential wall 3 of the pipe. As the distance from edge 24 to top surface 42a of the second flange is less than the distance of edge 22a' to the top surface of the second flange, edge 24 of the tubular second may thus extend at least partially into to opening in the wall 3 of the pipe, thereby increasing the structural integrity of the connection.

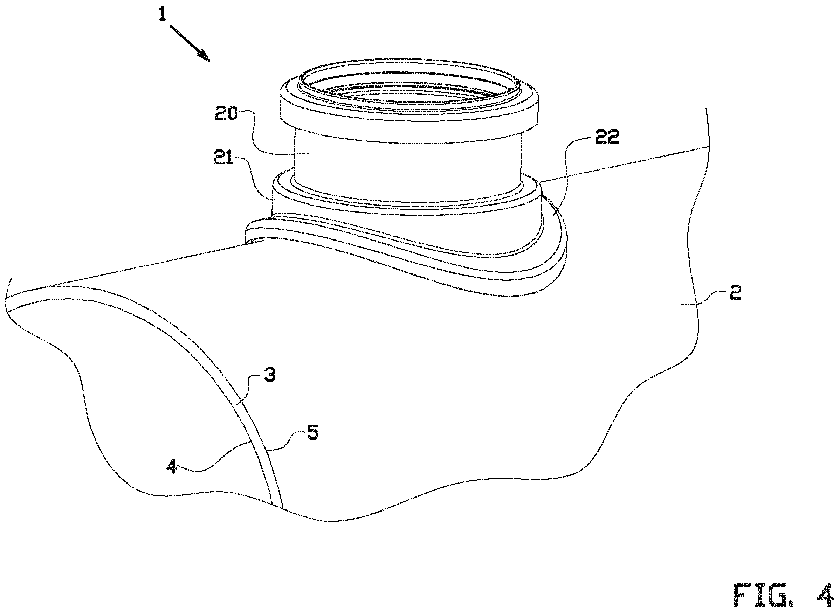

Figure 4 shows an isometric view of a first part 20 of a connection assembly according to the invention, having a saddle shaped flange 22 which substantially follows the shape of the outer surface of the main pipe 2.

Figure 5 shows an isometric view of a connection assembly according to the present invention, in which the first part 20 and second part 40 are not connected, but are aligned to be connected to each other. The inner surface 21a of the first tubular section 21 is provided with first locking means 30, comprising a first plurality of saw tooth shaped ridges 31,32,33,34. The outer surface 41b of the second tubular section is provided with second locking means 50 comprising a second plurality of saw-tooth shaped ridges 51-60. When engaged, the first and second locking means allow movement of the first and second part towards each other, but block movement of the first and second part away from each other, at least at a number of predetermined positions. The predetermined positions are determined by the spacing of the first and second locking members, which in the embodiment shown are spaced equidistantly and with mutual distances between the first locking members 31,32,33,34 being substantially the same as mutual distances between the second locking members 51-60. The first locking means are provided with fewer ridges than the second locking means, such that independent of the predetermined position in which the first and second part are arranged, the number of first locking members engaging the second locking members is substantially the same, i.e. equal to the number of first locking members.

The four locking members 31-34 of said first locking means 30 extend substantially around the entire inner surface 21a of said first tubular section 21, except for at the positions where said inner surface 21a is provided with guide means 27 which extend along the longitudinal direction of the first tubular section. Though only one such guide means 27 is clearly visible in figure 4, it will be clear that the embodiment shown comprises two such guide means arranged diametrically on the inner surface 21a of the first tubular section 21.

Likewise, the ten locking members 51-60 of said second locking means 50 extend substantially around the entire outer surface 41b of said second tubular section 41, except for at the positions where said outer surface is provided with guide means 47. The guide means 47 extend along the longitudinal direction of the second tubular section from the stop or abutment surface 46 across the plurality of locking members 51-60 and towards second flange 42. When the guide means engage each other, they provide a substantially fixed rotational orientation of the first part relative to the second part, while still allowing translation movement of said parts relative to each other. At the distal end of the guide means 47 located furthest from the second flange, the guide means comprise a rounded portion 47a for facilitating insertion of guide means 47 into the corresponding guide means 27 of the first tubular section.

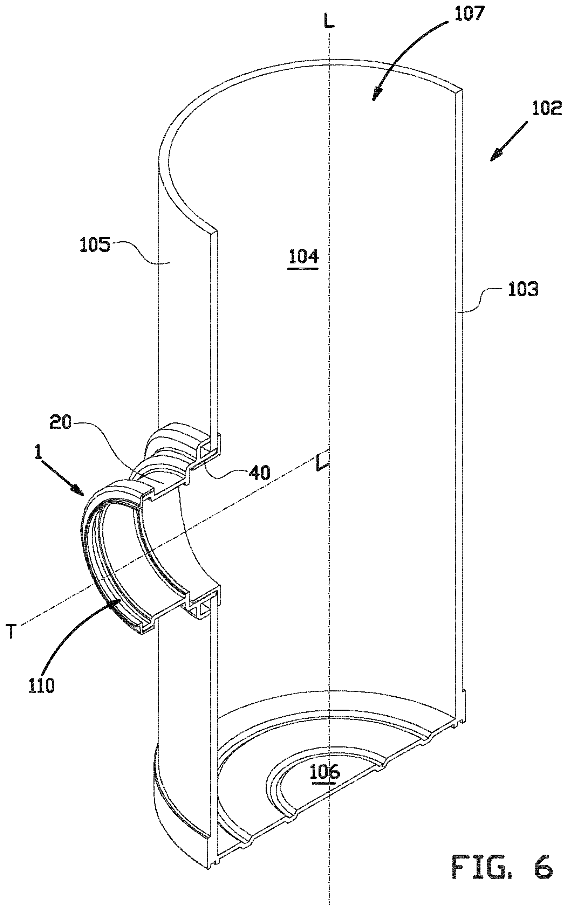

Figure 6 shows a connection assembly 1 comprising first part 20 and second part 40 mounted on an inspection pit 102. The inspection pit comprises a circumferential wall 103 which forms a cylindrical structure having an inner surface 104 and an outer surface 105. The inspection pit 2 is provided with an opening 110 in its circumferential wall 103, for allowing connection of a branch pipe to the inspection pit 102. Though figure 6 shows only one such opening in the circumferential wall 103, it will be appreciated that an inspection pit may also be provided with multiple such openings in the circumferential wall, for connecting multiple branch pipes to the inspection pit. The inspection pit comprises a bottom portion 106, which closes off a bottom side of the inspection pit and which faces oppositely from an opening 107 through which the longitudinal axis L of the cylindrical structure extends.

During mounting of the connection assembly 1 on the inspection pit 102, the first part 20 may be placed on the outer surface 105 of the circumferential wall 103, and the second part 40 may be mounted to the first part by first inserting the second part 40 through the opening 107, and the moving the flanges of the first and second part towards each other along translational axis T, which is perpendicular to the longitudinal axis L of the cylindrical structure.

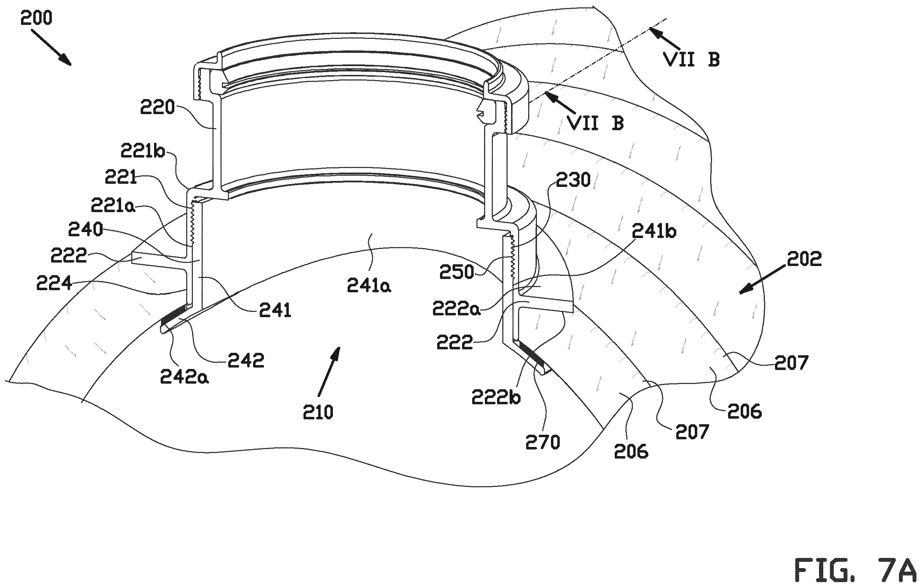

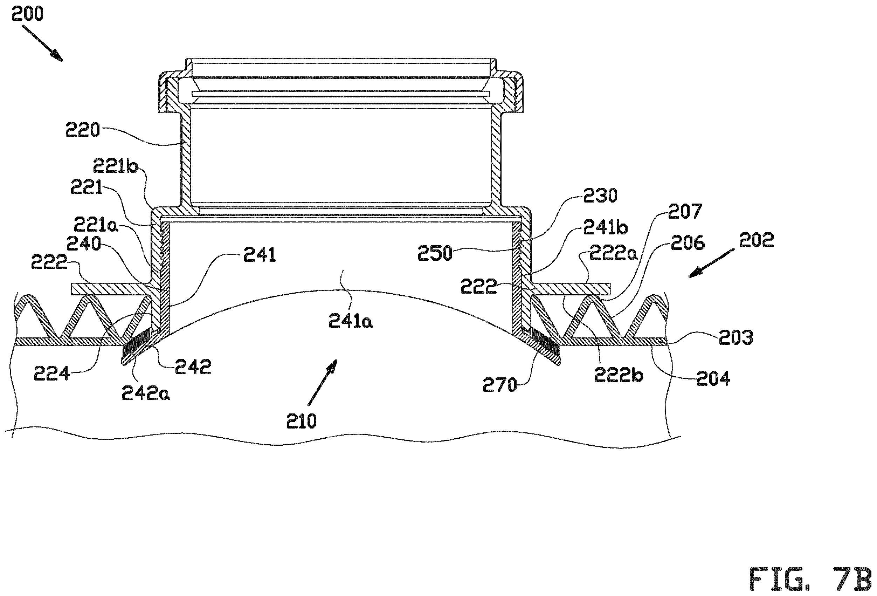

Figures 7A and 7B show a connection assembly 200 mounted on a profiled pipe 202 which pipe has a circumferential wall 203 and is provided with an opening 210 therein. On its outer surface, the profiled pipe 202 is provided with ridges 206 having peaks 207, while the circumferential inner surface 204 of the profiled pipe is substantially smooth. The connection assembly comprises a first part 220 comprising a first tubular section 221 with respective inner and outer circumferential surfaces 221a and 221b. The first part 220 is provided with a first flange 222, which is substantially planar and disc-shaped and has a lower surface 122b which transitions from the tubular section 221 and perpendicular thereto. The lower surface faces, in this case abuts the outer surface or peaks 207 of the profiled pipe 202. End 224 of the first tubular section, which is arranged on a side of the tubular section in which the lower surface 222b faces, is directed towards an annular wall of the opening 210 and in the embodiment shown abuts the annular wall. Though not shown, the structural integrity of the annular wall may be reinforced by arranging a support ring in the opening 210, with an outer surface of the support ring at least partially abutting the annular wall, and with an inner surface of the support ring abutting the outer surface of the first or second tubular section.

The connection assembly further comprises a second part 240, comprising a second tubular section 241, having respective inner and outer circumferential surfaces 241a and 241b. The outer diameter of the first tubular surface is such that it substantially fits in the opening 210, and the outer diameter of the second tubular section is such that it substantially form-fits within the first tubular section.

The second tubular section has a saddle shaped flange 242, which substantially follows the shape of the smooth inner surface 204 of the profiled pipe. A sealing ring 270 is provided between upper surface 242a of the second flange and the inner surface 204 of the profiled pipe, for providing a substantially fluid-tight connection between the profiled pipe and the first tubular section. The outer diameter of the second flange is larger than the diameter of the opening in the wall of the profiled pipe, such that it presses the sealing ring 270 against the inner surface 204 of the pipe when first and second locking means 230, 250 engage each other so that the wall 203 is clamped between the first and second flanges.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined in the appended claims.

## Claims

1. Connection assembly (1; 200) for connecting a branch pipe to a cylindrical structure (2; 102; 202), said cylindrical structure (2; 102; 202) comprising a circumferential wall (3; 103; 203) having an inner surface (4; 104; 204) and an outer surface (5; 105; 205), said wall provided with an opening (10; 110; 210) for connecting the branch pipe to the cylindrical structure, said connection assembly (1; 100; 200) comprising:
a first part (20; 220), comprising a first tubular section (21; 221), and a first flange (22; 222) having an outer diameter larger than a diameter of said opening (10; 110; 210), and
a second part (40; 240), comprising a second tubular section (41; 241) having a diameter smaller than the diameter of said opening (10; 110; 210), and a second flange (42; 242) having a diameter larger than said diameter of said opening (10; 110; 210),
wherein said first and second parts are adapted for clamping a portion of said circumferential wall of said cylindrical structure between said first flange and said second flange,
wherein said first and second tubular sections (21,41; 221,241) are provided with first locking means (30; 230) and second locking means (50; 250) on said facing surfaces (21a,41b; 221a,241b) of said first and second tubular sections (21,41; 221,241) respectively,
**characterized in that** said first tubular section (21; 221) is adapted for fitting inside said second tubular section (41; 241) or vice versa, with circumferential surfaces (21a, 41b; 221a, 241b) of said first and second tubular section (21, 41; 221, 241) facing each other, said first and second locking means (30,50; 230,250) are adapted for engaging each other for allowing linear movement of said first flange (22; 222) toward said second flange (42; 242) while said flanges remain substantially rotationally fixed to each other, and for blocking movement of said first flange (22; 222) away from said second flange (42; 242).

2. Connection assembly according to claim 1, wherein the first and second locking means together are adapted for forming a click connection.

3. Connection assembly according to any one of the preceding claims, wherein the first tubular section (21; 221) or said second tubular section (41;241) further comprises an outer circumferential wall (21b, 41a; 221b, 241a) for abutting an annular wall (11) of said opening (10) in the cylindrical structure which annular wall (11) delimits said opening (10), when said first locking means (30; 230) engage said second locking means (50; 250).

4. Connection assembly according to any one of the preceding claims, wherein said first and second locking means are adapted for blocking movement of said first flange away from said second flange at a number of predetermined positions, preferably wherein said number of predetermined positions is at least 4, preferably 6, more preferably 8.

5. Connection assembly according to any one of the preceding claims, wherein said first part (20) is provided with first guide (27) extending substantially along the longitudinal direction of said first tubular section (21), wherein said second part (40) is provided with a corresponding second guide (47) extending substantially along the longitudinal direction of the second tubular section (41), wherein said first and second guides (27,47) are adapted for guiding translational movement of first part (20) relative to said second part (40) and for substantially blocking a rotational movement of said first part (20) relative to said second part (40),
preferably wherein said guides (27,47) are formed on the same facing surfaces of said tubular sections (21,41) as said locking means (30,50),
preferably wherein said guides (27,47) extend along the entire length of said locking means (30,50) in the longitudinal direction of the respective tubular parts (21,41),
preferably wherein, when said first and second parts are mounted to the cylindrical structure, said first and second guides are arranged in a common plane which intersects the longitudinal axis of the cylindrical structure.

6. Connection assembly according to any one of the preceding claims, said first locking means comprises a first plurality of locking members, and wherein said second locking means comprises a second plurality of locking members for engaging said first plurality of locking members for said blocking of movement of the first flange away from said second flange, preferably wherein said locking members (31,51) of said first and/or second locking means (30,50) are arranged equidistantly, preferably at distances of 3 mm or less, more preferably at distances of 2 mm or less.

7. Connection assembly according to claim 6, wherein the number of locking members in said first plurality of locking members differs from the number of locking members in said second plurality of locking members, preferably by a factor of 2 of more.

8. Connection assembly according to claim 6 or claim 7, wherein said locking members (31,51) of said first and/or second locking means (30,50) extend substantially around the entire circumference of said first and/or second tubular section (21,41).

9. Connection assembly according to any one of the preceding claims, wherein said first and/or second flange (22,42) are formed to follow the shape of the inner and/or outer surface (4,5) of the cylindrical structure (2).

10. Connection assembly according to any one of the preceding claims, wherein said first and/or second flange (22,42; 242) is substantially saddle shaped.

11. Connection assembly according to any one of the preceding claims, wherein said first and/or second part (20,40) are each formed as a single part, preferably as an injection molded part, preferably wherein said first and/or said second part comprise PVC.

12. Connection assembly according to any one of the preceding claims, further comprising said cylindrical structure, such as a main pipe or an inspection pit.

13. Connection assembly according to claim 12, wherein said first tubular section (21; 221) has a diameter smaller than or substantially equal to the diameter of said opening (10; 110; 210), preferably, wherein said first tubular section (21; 221) and said second tubular section (41; 241) are adapted for at least partially extending into said opening (10; 110; 210),
preferably wherein said first tubular section (21; 221) of said first part projects past said first flange (22; 222) and extends beyond said outer surface of the cylindrical structure and at least partially into said opening of the cylindrical structure.

14. Method for attaching a connection assembly according to any one of claim 1-13 to a cylindrical structure, comprising the steps of:
- providing said cylindrical structure (2; 102; 202) with an opening (10; 110; 210),
- arranging said first part (20; 220) on the cylindrical structure, with its flange (22; 222) on an outer side of said cylindrical structure and with its tubular section (21; 221) projecting at least partially through said opening (10; 110; 210),
- arranging the second part (40; 240) on the cylindrical structure, with its flange (42; 242) on an inner side of said cylindrical structure and with its tubular section (41; 241) projecting at least partially through said opening (10; 110; 210) for engaging said tubular section (21; 221) of said first part (20; 220),
- moving said first part (20; 220) and said second part (40; 240) towards each other for clamping the wall (3; 103; 203) of the cylindrical structure (2; 102; 202) between said corresponding flanges (22,42; 222, 242).

## Patentansprüche

1. Verbindungsbaugruppe (1; 200) zum Verbinden eines Zweigrohrs mit einer zylindrischen Struktur (2; 102; 202), wobei die zylindrische Struktur (2; 102; 202) eine Umfangswand (3; 103; 203) umfasst, die eine Innenfläche (4; 104; 204) und eine Außenfläche (5; 105; 205) aufweist, wobei die Wand mit einer Öffnung (10; 110; 210) zum Verbinden des Zweigrohrs mit der zylindrischen Struktur versehen ist, wobei die Verbindungsbaugruppe (1; 100; 200) Folgendes umfasst:
einen ersten Teil (20; 220), der einen ersten rohrförmigen Abschnitt (21; 221) umfasst, und einen ersten Flansch (22; 222), der einen Außendurchmesser aufweist, der größer ist als ein Durchmesser der Öffnung (10; 110; 210), und
einen zweiten Teil (40; 240), der einen zweiten rohrförmigen Abschnitt (41; 241) umfasst, der einen Durchmesser aufweist, der kleiner ist als der Durchmesser der Öffnung (10; 110; 210), und einen zweiten Flansch (42; 242), der einen Durchmesser aufweist, der größer ist als der Durchmesser der Öffnung (10; 110; 210),
wobei der erste und der zweite Teil zum Festklemmen eines Teilstücks der Umfangswand der zylindrischen Struktur zwischen dem ersten Flansch und dem zweiten Flansch angepasst sind,
wobei der erste und zweite rohrförmige Abschnitt (21, 41; 221, 241) mit einem ersten Verriegelungsmittel (30; 230) oder ersten Verriegelungsmitteln (30; 230) und einem zweiten Verriegelungsmittel (50; 250) oder zweiten Verriegelungsmitteln (50; 250) auf den zugewandten Flächen (21a, 41b; 221a, 241 b) des ersten bzw. zweiten Abschnitts (21, 41; 221, 241) versehen sind,
**dadurch gekennzeichnet, dass** der erste rohrförmige Abschnitt (21; 221) zum Einpassen in den zweiten rohrförmigen Abschnitt (41; 241) oder umgekehrt angepasst ist, wobei Umfangsflächen (21 a, 41b; 221 a, 241 b) des ersten und zweiten rohrförmigen Abschnitts (21, 41; 221, 241) einander zugewandt sind,
wobei das erste und zweite Verriegelungsmittel (30, 50; 230, 250) oder die ersten und zweiten Verriegelungsmittel (30, 50; 230, 250) zum Ineinandergreifen angepasst sind, eine lineare Bewegung des ersten Flansches (22; 222) in Richtung des zweiten Flansches (42; 242) zu erlauben, während die Flansche im Wesentlichen drehfest zu einander bleiben, und das Wegbewegen des ersten Flansches (22; 222) von dem zweiten Flansch (42; 242) zu blockieren.

2. Verbindungsbaugruppe nach Anspruch 1, wobei das erste und zweite Verriegelungsmittel oder die ersten und zweiten Verriegelungsmittel zusammen zum Bilden einer Klickverbindung angepasst sind.

3. Verbindungsbaugruppe nach einem der vorhergehenden Ansprüche, wobei der erste rohrförmige Abschnitt (21; 221) oder der zweite rohrförmige Abschnitt (41; 241) überdies eine äußere Umfangswand (21 b, 41a; 221 b, 241a) zum Anliegen an einer ringförmigen Wand (11) der Öffnung (10) in der zylindrischen Struktur umfasst, deren ringförmige Wand (11) die Öffnung (10) begrenzt, wenn das erste Verriegelungsmittel (30; 230) in das zweite Verriegelungsmittel (50; 250) eingreift oder die ersten Verriegelungsmittel (30; 230) in die zweiten Verriegelungsmittel (50; 250) eingreifen.

4. Verbindungsbaugruppe nach einem der vorhergehenden Ansprüche, wobei das erste und zweite Verriegelungsmittel angepasst sind oder die ersten und zweiten Verriegelungsmittel angepasst sind, das Wegbewegen des ersten Flansches von dem zweiten Flansch in einer Anzahl von vorbestimmten Positionen zu blockieren, wobei vorzugsweise die Anzahl der vorbestimmten Positionen mindestens 4, vorzugsweise 6, besonders bevorzugt 8 beträgt.

5. Verbindungsbaugruppe nach einem der vorhergehenden Ansprüche, wobei der erste Teil (20) mit erster Führung (27) vorgesehen ist, die sich im Wesentlichen entlang der Längsrichtung des ersten rohrförmigen Abschnitts (21) erstreckt, wobei der zweite Teil (40) mit einer entsprechenden zweiten Führung (47) versehen ist, die sich im Wesentlichen entlang der Längsrichtung des zweiten rohrförmigen Abschnitts (41) erstreckt, wobei die erste und zweite Führung (27, 47) angepasst sind, eine Translationsbewegung des ersten Teils (20) relativ zum zweiten Teil (40) zu führen und eine Drehbewegung des ersten Teils (20) relativ zum zweiten Teil (40) im Wesentlichen zu blockieren.
wobei vorzugsweise die Führungen (27, 47) auf denselben zugewandten Flächen der rohrförmigen Abschnitte (21, 41) wie die Verriegelungsmittel (30, 50) gebildet sind,
wobei vorzugsweise die Führungen (27, 47) sich entlang der Gesamtlänge des Verriegelungsmittels (30, 50) oder der Verriegelungsmittel (30, 50) in die Längsrichtung der jeweiligen rohrförmigen Teile (21, 41) erstrecken,
wobei vorzugsweise, wenn die ersten und zweiten Teile an der zylindrischen Struktur montiert sind, die ersten und zweiten Führungen in einer gemeinsamen Ebene angeordnet sind, die sich mit der Längsachse der zylindrischen Struktur kreuzt.

6. Verbindungsbaugruppe nach einem der vorhergehenden Ansprüche, wobei das erste Verriegelungsmittel oder die ersten Verriegelungsmittel eine erste Vielzahl von Verriegelungsgliedern umfassen, und wobei das zweite Verriegelungsmittel oder die zweiten Verriegelungsmittel eine zweite Vielzahl von Verriegelungsgliedern zum Eingreifen in die erste Vielzahl von Verriegelungsgliedern umfassen, um das Wegbewegen des ersten Flansches von dem zweiten Flansch zu blockieren, wobei vorzugsweise die Verriegelungsglieder (31, 51) des oder der ersten und/oder zweiten Verriegelungsmittel (30, 50) mit gleichem Abstand angebracht sind, vorzugsweise mit Abständen von 3 mm oder weniger, besonders bevorzugt mit Abständen von 2 mm oder weniger.

7. Verbindungsbaugruppe nach Anspruch 6, wobei sich die Anzahl der Verriegelungsglieder in der ersten Vielzahl von Verriegelungsgliedern von der Anzahl der Verriegelungsglieder in der zweiten Vielzahl von Verriegelungsgliedern unterscheidet, vorzugsweise um einen Faktor von 2 oder mehr.

8. Verbindungsbaugruppe nach Anspruch 6 oder 7, wobei sich die Verriegelungsglieder (31, 51) des oder der ersten und/oder zweiten Verriegelungsmittel (30, 50) im Wesentlichen um den Gesamtumfang des ersten und/oder zweiten rohrförmigen Abschnitts (21, 41) erstrecken.

9. Verbindungsbaugruppe nach einem der vorhergehenden Ansprüche, wobei der erste und/oder zweite Flansch (22, 42) gebildet sind, um der Form der Innen- und/oder Außenfläche (4, 5) der zylindrischen Struktur (2) zu folgen.

10. Verbindungsbaugruppe nach einem der vorhergehenden Ansprüche, wobei der erste und/oder zweite Flansch (22, 42; 242) im Wesentlichen sattelförmig ist.

11. Verbindungsbaugruppe nach einem der vorhergehenden Ansprüche, wobei der erste und/oder zweite Teil (20, 40) jeweils einteilig gebildet ist, vorzugsweise als ein Spritzgussteil, wobei vorzugsweise der erste und/oder zweite Teil PVC umfasst.

12. Verbindungsbaugruppe nach einem der vorhergehenden Ansprüche, die überdies die zylindrische Struktur, wie ein Hauptrohr oder eine Arbeitsgrube, umfasst.

13. Verbindungsbaugruppe nach Anspruch 12, wobei der erste rohrförmige Abschnitt (21; 221) einen Durchmesser aufweist, der vorzugsweise kleiner als oder im Wesentlichen gleich dem Durchmesser der Öffnung (10; 110; 210) ist, wobei der erste rohrförmige Abschnitt (21; 221) und der zweite rohrförmige Abschnitt (41; 241) angepasst sind, sich mindestens teilweise in die Öffnung (10; 110; 210) zu erstrecken,
wobei vorzugsweise der erste rohrförmige Abschnitt (21; 221) des ersten Teils hinter den ersten Flansch (22; 222) ragt und sich über die Außenfläche der zylindrischen Struktur hinaus und mindestens teilweise in die Öffnung der zylindrischen Struktur erstreckt.

14. Verfahren zum Anbringen einer Verbindungsbaugruppe nach einem der Ansprüche 1 - 13 an eine zylindrische Struktur, das die folgenden Schritte umfasst:
- Bereitstellen der zylindrischen Struktur (2; 102; 202) mit einer Öffnung (10; 110; 210),
- Anordnen des ersten Teils (20; 220) auf der zylindrischen Struktur, wobei sein Flansch (22; 222) auf einer Außenseite der zylindrischen Struktur ist und sein rohrförmiger Abschnitt (21; 221) sich mindestens teilweise durch die Öffnung (10; 110; 210) erstreckt,
- Anordnen des zweiten Teils (40; 240) auf der zylindrischen Struktur, wobei sein Flansch (42; 242) auf einer Innenseite der zylindrischen Struktur ist und sein rohrförmiger Abschnitt (41; 241) sich mindestens teilweise durch die Öffnung (10; 110; 210) erstreckt, um in den rohrförmigen Abschnitt (21; 221) des ersten Teils (20; 220) einzugreifen,
- Bewegen des ersten Teils (20; 220) und des zweiten Teils (40; 240) aufeinander zu, um die Wand (3; 103; 203) der zylindrischen Struktur (2; 102; 202) zwischen den entsprechenden Flanschen (22, 42; 222, 242) festzuklemmen.

## Revendications

1. Ensemble de connexion (1 ; 200) pour connecter un tuyau de branchement à une structure cylindrique (2 ; 102 ; 202), ladite structure cylindrique (2 ; 102 ; 202) comprenant une paroi circonférentielle (3 ; 103 ; 203) ayant une surface interne (4 ; 104 ; 204) et une surface externe (5 ; 105 ; 205), ladite paroi étant prévue avec une ouverture (10 ; 110 ; 210) pour connecter le tuyau de branchement à la structure cylindrique, ledit ensemble de branchement (1 ; 100 ; 200) comprenant :
une première partie (20 ; 220) comprenant une première section tubulaire (21 ; 221), et une première bride (22 ; 222) ayant un diamètre externe supérieur à un diamètre de ladite ouverture (10 ; 110 ; 210), et
une seconde partie (40 ; 240) comprenant une seconde section tubulaire (41 ; 241) ayant un plus petit diamètre que le diamètre de ladite ouverture (10 ; 110 ; 210), et une seconde bride (42 ; 242) ayant un plus grand diamètre que le diamètre de ladite ouverture (10 ; 110 ; 210),
dans lequel lesdites première et seconde parties sont adaptées pour serrer une partie de ladite paroi circonférentielle de ladite structure cylindrique entre ladite première bride et ladite seconde bride,
dans lequel lesdites première et seconde sections tubulaires (21, 41 ; 221, 241) sont prévues avec des premiers moyens de verrouillage (30 ; 230) et des seconds moyens de verrouillage (50 ; 250) sur lesdites surfaces en vis-à-vis (21a, 41b ; 221a, 241b) desdites première et seconde sections tubulaires (21, 41 ; 221, 241) respectivement,
**caractérisé en ce que** ladite première section tubulaire (21 ; 221) est adaptée pour se monter à l'intérieur de ladite seconde section tubulaire (41 ; 241) ou vice versa, avec des surfaces circonférentielles (21a, 41b ; 221a, 241b) desdites première et seconde sections tubulaires (21, 41 ; 221, 241) se faisant face,
lesdits premiers et seconds moyens de verrouillage (30, 50 ; 230, 250) sont adaptés pour se mettre en prise entre eux afin de permettre le mouvement linéaire de ladite première bride (22 ; 222) vers ladite seconde bride (42 ; 242) tandis que lesdites brides restent sensiblement fixes en rotation l'une par rapport à l'autre, et afin de bloquer le mouvement de ladite première bride (22 ; 222) à distance de ladite seconde bride (42 ; 242).

2. Ensemble de connexion selon la revendication 1, dans lequel les premiers et seconds moyens de verrouillage ensemble sont adaptés pour former une connexion encliquetable.

3. Ensemble de connexion selon l'une quelconque des revendications précédentes, dans lequel la première section tubulaire (21 ; 221) ou ladite seconde section tubulaire (41 ; 241) comprend en outre une paroi circonférentielle externe (21b, 41a ; 221b, 241a) pour venir en butée contre une paroi annulaire (11) de ladite ouverture (10) dans la structure cylindrique, laquelle paroi annulaire (11) délimite ladite ouverture (10), lorsque lesdits premiers moyens de verrouillage (30 ; 230) mettent en prise lesdits seconds moyens de verrouillage (50 ; 250).

4. Ensemble de connexion selon l'une quelconque des revendications précédentes, dans lequel lesdits premiers et seconds moyens de verrouillage sont adaptés pour bloquer le mouvement de ladite première bride à distance de ladite seconde bride à un certain nombre de positions prédéterminées, de préférence dans lequel ledit nombre de positions prédéterminées est au moins de 4 ; de préférence de 6, encore de préférence de 8.

5. Ensemble de connexion selon l'une quelconque des revendications précédentes, dans lequel ladite première partie (20) est prévue avec un premier guide (27) s'étendant sensiblement le long de la direction longitudinale de ladite première section tubulaire (21), dans lequel ladite seconde partie (40) est prévue avec un second guide (47) correspondant s'étendant sensiblement le long de la direction longitudinale de la seconde section tubulaire (41), dans lequel lesdits premier et second guides (27, 47) sont adaptés pour guider le mouvement de translation de la première partie (20) par rapport à ladite seconde partie (40) et pour bloquer sensiblement un mouvement de rotation de ladite première partie (20) par rapport à ladite seconde partie (40),
de préférence dans lequel lesdits guides (27, 47) sont formés sur les mêmes surfaces en vis-à-vis desdites sections tubulaires (21, 41) que lesdits moyens de verrouillage (30, 50),
de préférence dans lequel lesdits guides (27, 47) s'étendent le long de toute la longueur desdits moyens de verrouillage (30, 50) dans la direction longitudinale des parties tubulaires (21, 41) respectives,
de préférence dans lequel, lorsque lesdites première et seconde parties sont montées sur la structure cylindrique, lesdits premier et second guides sont agencés dans un plan commun qui coupe l'axe longitudinal de la structure cylindrique.

6. Ensemble de connexion selon l'une quelconque des revendications précédentes, lesdits premiers moyens de verrouillage comprennent une première pluralité d'éléments de verrouillage, et dans lequel lesdits seconds moyens de verrouillage comprennent une seconde pluralité d'éléments de verrouillage pour mettre en prise ladite première pluralité d'éléments de verrouillage pour ledit blocage du mouvement de ladite première bride à distance de ladite seconde bride, de préférence dans lequel lesdits moyens de verrouillage (31, 51) desdits premiers et/ou seconds moyens de verrouillage (30, 50) sont agencés à équidistance, de préférence à des distances de 3 mm ou moins, encore de préférence à des distances de 2 mm ou moins.

7. Ensemble de connexion selon la revendication 6, dans lequel le nombre d'éléments de verrouillage dans ladite première pluralité d'éléments de verrouillage diffère du nombre d'éléments de verrouillage dans ladite seconde pluralité d'éléments de verrouillage, de préférence selon un facteur de 2 de plus.

8. Ensemble de connexion selon la revendication 6 ou la revendication 7, dans lequel lesdits éléments de verrouillage (31, 51) desdits premiers et/ou seconds moyens de verrouillage (30, 50) s'étendent sensiblement autour de toute la circonférence de ladite première et/ou seconde section tubulaire (21, 41).

9. Ensemble de connexion selon l'une quelconque des revendications précédentes, dans lequel ladite première et/ou seconde bride (22, 42) sont formées pour suivre la forme de la surface interne et/ou externe (4, 5) de la structure cylindrique (2).

10. Ensemble de connexion selon l'une quelconque des revendications précédentes, dans lequel ladite première et/ou seconde bride (22, 42 ; 242) est sensiblement en forme de selle.

11. Ensemble de connexion selon l'une quelconque des revendications précédentes, dans lequel ladite première et/ou seconde partie (20, 40) sont chacune formées comme une partie unique, de préférence comme une partie moulée par injection, de préférence dans lequel ladite première et/ou ladite seconde partie comprennent du PVC.

12. Ensemble de connexion selon l'une quelconque des revendications précédentes, comprenant en outre ladite structure cylindrique, telle qu'un tuyau principal ou un regard de visite.

13. Ensemble de connexion selon la revendication 12, dans lequel ladite première section tubulaire (21 ; 221) a un diamètre inférieur ou sensiblement égal au diamètre de ladite ouverture (10 ; 110 ; 210), de préférence dans lequel ladite première section tubulaire (21 ; 221) et ladite seconde section tubulaire (41 ; 241) sont adaptées pour s'étendre au moins partiellement dans ladite ouverture (10 ; 110 ; 210),
de préférence dans lequel ladite première section tubulaire (21 ; 221) de ladite première partie fait saillie au-delà de ladite première bride (22 ; 222) et s'étend au-delà de ladite surface externe de la structure cylindrique et au moins partiellement dans ladite ouverture de la structure cylindrique.

14. Procédé pour fixer un ensemble de connexion selon l'une quelconque des revendications 1 à 13 à une structure cylindrique, comprenant les étapes suivantes :
- prévoir ladite structure cylindrique (2 ; 102 ; 202) avec une ouverture (10 ; 110 ; 210),
- agencer ladite première partie (20 ; 220) sur la structure cylindrique, avec sa bride (22 ; 222) sur un côté externe de ladite structure cylindrique et avec sa section tubulaire (21 ; 221) faisant saillie au moins partiellement à travers ladite ouverture (10 ; 110 ; 210),
- agencer la seconde partie (40 ; 240) sur la structure cylindrique, avec sa bride (42 ; 242) sur un côté interne de ladite structure cylindrique et avec sa section tubulaire (41 ; 241) faisant saillie au moins partiellement à travers ladite ouverture (10 ; 110 ; 210) pour mettre en prise ladite section tubulaire (21 ; 221) de ladite première partie (20 ; 220),
- déplacer ladite première partie (20 ; 220) et ladite seconde partie (40 ; 240) l'une vers l'autre pour serrer la paroi (3 ; 103 ; 203) de la structure cylindrique (2 ; 102 ; 202) entre lesdites brides (22, 42 ; 222 ; 242) correspondantes.
